# EUROPÄISCHE PATENTSCHRIFT

(11) **EP 2 786 041 B1**
(45) Veröffentlichungstag und Bekanntmachung des Hinweises auf die Patenterteilung: **23.08.2017**
(21) Anmeldenummer: 12791097.4
(22) Anmeldetag: 16.11.2012
(51) Int. Cl.: F16F 1/373, F16F 9/58

(54) **LAGERBUCHSE FÜR EINE ELASTOMERFEDER**
BEARING BUSH FOR AN ELASTOMER SPRING
COUSSINET DESTINÉ À UN RESSORT EN ÉLASTOMÈRE

(30) Priorität: 02.12.2011 DE 102011120260
(43) Veröffentlichungstag der Anmeldung: 08.10.2014
(73) Patentinhaber: Audi AG, 85045 Ingolstadt (DE)
(72) Erfinder: KILLIAN, Friedrich, 85122 Hitzhofen (DE); POPLUTZ, Martin, 85092 Kösching (DE); SCHRAMM, Karl, 85137 Pfalzpaint (DE); SAND, Michael, 86676 Ehekirchen (DE)
(86) Internationale Anmeldenummer: PCT/EP2012/004757
(87) Internationale Veröffentlichungsnummer: WO 2013/079165

(56) Entgegenhaltungen:
- EP-B1- 1 360 430
- DE-A1- 10 026 970
- DE-A1- 10 309 202
- DE-A1- 10 337 175

## Beschreibung

Die Erfindung betrifft eine Lagerbuchse für eine Elastomerfeder gemäß der im Oberbegriff des Patentanspruches 1 angegebenen Art.

Derartige Lagerbuchsen für eine Elastomerfeder sind aus dem Stand der Technik hinreichend bekannt und werden bespielsweise bei Kraftfahrzeugen sowohl an der Vorderals auch der Hinterachse als Dämpferlager zur Lagerung der Kolbenstange eines Stoßdämpfers am Kraftfahrzeugaufbau eingesetzt. In der Regel wird hierbei die Elastomerfeder mittels eines umlaufenden Wulstes durch radiale Vorspannung außenzentriert, kraftschlüssig in der Lagerbuchse gehalten.

Als nachteilig hat sich hierbei erwiesen, dass unter gewissen klimatischen Bedingungen, nämliche niedrige Temperaturen kombiniert mit hoher Luftfeuchtigkeit, die kraftschlüssige Festlegung der Elastomerfeder in der Lagerbuchse nicht ausreichend ist, so dass unter diesen klimatischen Bedingungen unter Umständen ein Lösen der Elastomerfeder aus der Lagerbuchse auftreten kann.

Die DE 100 26 970 A1 beschreibt eine Stoßdämpferanordnung eines Kraftfahrzeugs, bei dem die Kolbenstange des Stoßdämpfers über eine in einer Lagerbuchse gehaltenen Elastomerfeder am Kraftfahrzeugaufbau gelagert ist. Hierbei ist die Elastomerfeder ausschließlich formschlüssig in der Lagerbuchse gehalten. Die formschlüssige Halterung der Elastomerfeder in der Lagerbuchse zeichnet sich insbesondere durch den festen Sitz aus und ist aus diesem Grund nur schwer manuell aus der Lagerbuchse lösbar. Insbesondere im Hinblick auf die Überführung eines Kraftfahrzeugs erweist sich diese Ausführung als nachteilig, da für das Überführen des Kraftfahrzeugs sogenannte Blockierstücke in die Tragfeder eingebracht werden, was wiederum in der Regel eine Demontage der Elastomerfedern erfordert.

Ein Verbindungsteil in dem ein Elastomerkörper mittels einer formschlüssigen Einknüpfung gehalten ist, ist in der EP 1 360 430 31 offenbart. Hierzu weist das Verbindungsteil eine umlaufende, radial nach innen ausgerichtete Kante auf, hinter der der Elastomerkörper geklemmt ist.

Eine gattungsgemäße, sämtliche Merkmale des Oberbegriffs des Patentanspruches 1 aufweisende Lagerbuchse für ein Elastomerkörper ist in der DE 103 37 175 A1 offenbart.

Der Erfindung liegt die Aufgabe zugrunde, eine Lagerbuchse für eine Elastomerfeder derart weiterzubilden, dass auch unter extremen klimatischen Bedingungen, nämlich niedrige Temperaturen in Kombination mit hoher Luftfeuchtigkeit, ein ausreichender Halt der Elostomerfeder in der Lagerbuchse gewährleistet ist, und zudem unter normalen klimatischen Bedingungen eine einfache

Demontage der Elastomerfeder sichergestellt ist. Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise ist eine Lagerbuchse für eine Elastomerfeder vorgesehen, in der die Elastomerfeder mittels eines umlaufenden Wulstes durch radiale Vorspannung außenzentriert in der Lagerbuchse kraftschlüssig gehalten ist.

Zudem weist die Lagerbuchse im Bereich des umlaufenden Wulstes mindestens eine Aussparung auf, in die der Wulst der Elastomerfeder eingreift. D.h. der mittels radialer Vorspannung außenzentriert, kraftschlüssig in der Lagerbuchse gehaltene Wulst der Elastomerfeder kann sich im Bereich der Aussparung entspannen, was dazu führt, dass der Wulst in die Aussparung hereingedrückt wird. Durch die erfindungsgemäße Ausbildung der Lagerbuchse ist folglich die Elastomerfeder kraftschlüssig als auch zusätzlich über eine gewisse Art von Formschluss in der Lagerbuchse gehalten. Hierdurch ist in vorteilhafter Weise sichergestellt, dass unter normalen klimatischen Bedingungen die Elastomerfeder mittels eines einfachen Druckes auf den aus der Aussparung herausstehenden Wulstes problemlos für die Blockierstückmontage aus der Lagerbuchse entfernt werden kann, während unter extremen klimatischen Bedingungen, der aus der Aussparung herausgedrückte Wulst aufgrund seines nunmehr "gefrorenem Zustand" an der Aussparung verhakt, so dass Elastomerfeder und Lagerbuchse fest zueinander gehalten sind.

Vorzugsweise weist die Lagerbuchse zwei gegenüberliegend angeordnete Aussparungen auf. Das Vorsehen zweier gegenüberliegender Aussparungen erweist sich als vorteilhaft, da hierdurch eine einfache händische Demontage gewährleistet ist.

Um bei extremen klimatischen Bedingungen eine ausreichende "Verhakung" und damit einen ausreichenden Halt mittels eines umlaufenden Wulstes durch radiale Vorspannung außenzentriert in der Lagerbuchse kraftschlüssig gehalten ist.

Erfindungsgemäß weist die Lagerbuchse im Bereich des umlaufenden Wulstes mindestens eine Aussparung auf, in die der Wulst der Elastomerfeder eingreift. D.h. der mittels radialer Vorspannung außenzentriert, kraftschlüssig in der Lagerbuchse gehaltene Wulst der Elastomerfeder kann sich im Bereich der Aussparung entspannen, was dazu führt, dass der Wulst in die Aussparung hereingedrückt wird. Durch die erfindungsgemäße Ausbildung der Lagerbuchse ist folglich die Elastomerfeder kraftschlüssig als auch zusätzlich über eine gewisse Art von Formschluss in der Lagerbuchse gehalten. Hierdurch ist in vorteilhafter Weise sichergestellt, dass unter normalen klimatischen Bedingungen die Elastomerfeder mittels eines einfachen Druckes auf den aus der Aussparung herausstehenden Wulstes problemlos für die Blockierstückmontage aus der Lagerbuchse entfernt werden kann, während unter extremen klimatischen Bedingungen, der aus der Aussparung herausgedrückte Wulst aufgrund seines nunmehr "gefrorenem Zustand" an der Aussparung verhakt, so dass Elastomerfeder und Lagerbuchse fest zueinander gehalten sind.

Vorzugsweise weist die Lagerbuchse zwei gegenüberliegend angeordnete Aussparungen auf. Das Vorsehen zweier gegenüberliegender Aussparungen erweist sich als vorteilhaft, da hierdurch eine einfache händische Demontage gewährleistet ist.

Um bei extremen klimatischen Bedingungen eine ausreichende "Verhakung" und damit einen ausreichenden Halt zu gewährleisten, weisen die beiden Aussparungen in Umfangsrichtung betrachtet eine dem Bogenmaß n/4 entsprechende Bogenlänge auf.

Vorzugsweise weisen die Aussparungen in axiale Richtung betrachtet eine der Wulstdicke entsprechende Höhe auf. Dies hat den positiven Effekt, dass nach Einsetzen der Elostomerfeder in die Lagerbuchse und der dann auftretenden Entspannung im Bereich der Aussparung ein einfaches "Herausdrücken" des Wulstes im Bereich der Aussparung gewährleistet ist.

Weitere Vorteile, Merkmale und Anwendungsmöglichkeiten der vorliegenden Erfindung ergeben sich aus der nachfolgenden Beschreibung in Verbindung mit dem in der Zeichnungen dargestellten Ausführungsbeispiel.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine perspektivische Darstellung der erfindungsgemäßen Lagerbuchse;
- Fig. 2: eine Seitenansicht der erfindungsgemäßen Lagerbuchse aus Fig. 1, und
- Fig. 3: eine Elastomerfeder zur Aufnahme in der Lagerbuchse aus Fig. 1.

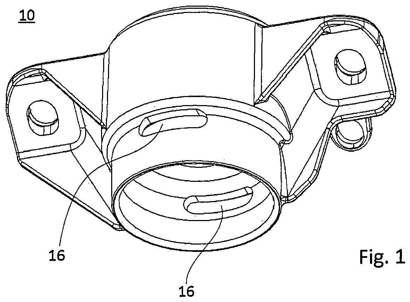

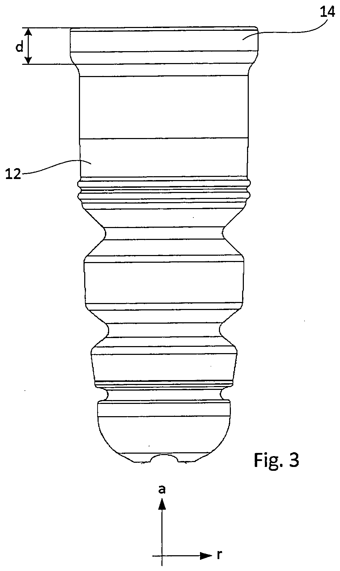

Fig. 1 zeigt eine insgesamt mit der Bezugsziffer 10 bezeichnete Lagerbuchse für eine in Fig. 3 dargestellte Elastomerfeder 12.

In bekannter Art und Weise kann über die Lagerbuchse 12 eine Kolbstange eines Stoßdämpfers an einem Kraftfahrzeugaufbau gelagert werden.

Wie Fig. 3 zu entnehmen ist, weist die Elastomerfeder 12 in ihrem in axiale Richtung a betrachtet oberen Endbereich einen umlaufenden Wulst 14 auf.

Wie Fig. 1 zu entnehmen ist, weist die Lagerbuchse 10 zwei gegenüberliegend angeordnete Aussparungen 16 auf.

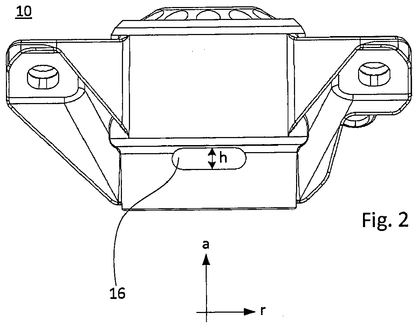

Die Aussparungen 16 weisen dabei in axiale Richtung a betrachtet eine Höhe h auf, die der Wulstdicke d entspricht, vgl. Fig. 3 und Fig. 2.

Im montierten Zustand ist die Zusatzfeder 12 über den umlaufenden Wulst 14 mittels radialer Vorspannung kraftschlüssig im Innern der Lagerbuchse 10 gehalten. Zusätzlich ist durch das erfindungsgemäße Vorsehen der Aussparungen 16 sichergestellt, dass der Wulst 14 sich im Bereich der Aussparungen 16 entspannen kann, was dazu führt, dass der Wulst 14 aus den Aussparungen 16 "herausgedrückt" wird, so dass die Elastomerfeder 14 zusätzlich noch formschlüssig in der Lagerbuchse 10 gehalten ist.

Hierdurch ist sichergestellt, dass unter normalen klimatischen Bedingungen durch ein Druck auf den aus den Aussparungen 16 hinausstehende Wulstbereich eine einfache Demontage ermöglicht ist, während bei extremen klimatischen Bedingungen aufgrund des nunmehr "gefrorenem Zustand" des aus der Aussparung 16 hinausstehenden Wulstbereich ein sicherer Halt gewährleistet ist.

### Bezugszeichenliste

- 10: Lagerbuchse
- 12: Elastomerfeder
- 14: Wulst
- 16: Aussparung

- h: Höhe der Aussparungen in axiale Richtung
- d: Wulstdicke
- a: axiale Richtung
- r: radiale Richtung

## Patentansprüche

1. Lagerbuchse (10) für eine Elastomerfeder (12), wobei die Elastomerfeder (12) einen umlaufenden Wulst (14) aufweist, über den die Elastomerfeder (12) mittels radialer Vorspannung außenzentriert, kraftschlüssig in der Lagerbuchse (10) hineingedrückt gehalten ist, wobei die Lagerbuchse (10) im Bereich des umlaufenden Wulstes (14) gegenüberliegende Aussparungen (16) aufweist, in die der Wulst (14) eingreift, **dadurch gekennzeichnet, dass** der Wulst (14) aus den Aussparungen (16) heraussteht.

2. Lagerbuchse (10) nach Patentanspruch 1, **dadurch gekennzeichnet, dass** die Lagerbuchse (10) zwei gegenüberliegend angeordnete Aussparungen (16) aufweist.

3. Lagerbuchse (10) nach Patentanspruch 2, **dadurch gekennzeichnet, dass** die beiden Aussparungen (16) in Umfangsrichtung betrachtet eine dem Bogenmaß **Π/4** entsprechende Bogenlänge aufweisen.

4. Lagerbuchse (10) nach einem der vorangehenden Patentansprüche, **dadurch gekennzeichnet, dass** die Aussparung (en) (16) in axiale Richtung (a) betrachtet eine der Wulstdicke (d) entsprechende Höhe aufweisen.

## Claims

1. Bearing bush (10) for an elastomer spring (12), wherein the elastomer spring (12) has a circumferential bead (14), via which the elastomer spring (12) is centred on the outside by means of radial preloading and force fittingly inserted into and retained within the bearing bush (10), wherein the bearing bush (10) comprises recesses (16) lying opposite each other in the area of the circumferential bead (14) in which the bead (14) engages, **characterised in that** the bead (14) protrudes from the recesses (16).

2. Bearing bush (10) according to claim 1, **characterised in that** the bearing bush (10) comprises two recesses (16) arranged opposite each other.

3. Bearing bush (10) according to claim 2, **characterised in that** the two recesses (16) have an arc length corresponding to the radian measure Π/4 when viewed in the circumferential direction.

4. Bearing bush (10) according to any of the preceding claims, **characterised in that** the recess(es) (16) have a height corresponding to the bead thickness (d) when viewed in the axial direction (a).

## Revendications

1. Coussinet (10) pour un ressort en élastomère (12), dans lequel le ressort en élastomère (12) comporte un bourrelet (14) périphérique par l'intermédiaire duquel le ressort en élastomère (12) est maintenu, centré vers l'extérieur au moyen d'une précontrainte radiale et poussé en force dans le coussinet (10), et dans lequel le coussinet (10) comporte dans la zone du bourrelet (14) périphérique des évidements (16) opposés dans lesquels s'insère le bourrelet (14), **caractérisé en ce que** le bourrelet (14) dépasse des évidements (16).

2. Coussinet (10) selon la revendication 1, **caractérisé en ce que** le coussinet (10) comporte deux évidements (16) disposés à l'opposé l'un de l'autre.

3. Coussinet (10) selon la revendication 2, **caractérisé en ce que** les deux évidements (16) ont, vus dans une direction circonférentielle, une longueur d'arc correspondant à la mesure d'arc π/4.

4. Coussinet (10) selon l'une des revendications précédentes, **caractérisé en ce que** le ou les évidements (16) ont, vus dans une direction axiale (a), une hauteur qui correspond à l'épaisseur de bourrelet (d).
